# EUROPÄISCHE PATENTSCHRIFT

(11) **EP 2 369 312 B1**
(45) Veröffentlichungstag und Bekanntmachung des Hinweises auf die Patenterteilung: **03.05.2017**
(21) Anmeldenummer: 11001994.0
(22) Anmeldetag: 10.03.2011
(51) Int. Cl.: G01G 15/02, B65B 3/28

(54) **Vorrichtung zum Handhaben von Portionen aus Produkten**
Device for handling portions of products
Dispositif de manipulation de portions de produits

(30) Priorität: 25.03.2010 DE 102010012727
(43) Veröffentlichungstag der Anmeldung: 28.09.2011
(73) Patentinhaber: Weber Maschinenbau GmbH Breidenbach, 35236 Breidenbach (DE)
(72) Erfinder: Weber, Günther, 17094 Gross Nemerow (DE)
(74) Vertreter: Manitz Finsterwald Patentanwälte PartmbB

(56) Entgegenhaltungen:
- DE-A1- 3 711 688
- DE-A1-102008 009 328
- DE-U1- 9 408 979
- US-A1- 2009 249 749

## Beschreibung

Die vorliegende Erfindung betrifft eine Vorrichtung zum Handhaben von Portionen aus Produkten, insbesondere Lebensmittelprodukten, mit einem Produktförderer, welcher die Portionen nacheinander entlang einer Förderrichtung fördert, und wenigstens einem Sensor, der dazu dient, das Gewicht der geförderten Portionen zu ermitteln.

Derartige Vorrichtungen werden beispielsweise in der Lebensmittelindustrie dazu eingesetzt, um von einer Schneidvorrichtung, wie z.B. einem Hochleistungsslicer, abgetrennte Produktscheiben portionsweise einer nachgeordneten Bearbeitungsvorrichtung, beispielsweise einer Verpackungsmaschine, zuzuführen. Mittels des Sensors wird das Gewicht jeder geförderten Portion ermittelt. Um sicherzustellen, dass nur solche Portionen weiterverarbeitet werden, welche eine vorgegebene Gewichtsspezifikation erfüllen, werden fehlgewichtige Portionen entweder aussortiert oder vor der Weiterverarbeitung durch manuelle Korrektur auf ein gefordertes Sollgewicht gebracht. Beides beeinträchtigt letztlich die Wirtschaftlichkeit der Produktionsanlage.

Die DE 94 08 979 U1 offenbart eine Sortieranlage für Lebensmittelprodukte, welche zwei parallele Förderbänder sowie zwei zugehörige Handhabungsroboter umfasst. Einer der Roboter schiebt die geförderten Produkte von dem eingehenden Förderband auf eine zwischen den beiden Förderbändern befindliche Ablagefläche, während der zweite Roboter auf der Ablagefläche befindliche Produktanhäufungen auf das ausgehende Förderband zieht.

In der DE 37 11 688 A1 ist eine Lebensmittel-Verpackungsmaschine offenbart, bei welcher ein Slicer Produktscheiben erzeugt, welche auf tablettartigen Produktträgern zu Portionen zusammengestellt werden. Die Produktträger mit den Portionen werden dann einer Verpackungsstation zugeführt.

Die US 2009/0249749 A1 offenbart eine Vorrichtung zum Zusammenstellen von Produktportionen in entsprechenden Behältern. Die von einem Slicer erzeugten Produktscheiben werden auf einem Eingangsförderer einer Umsetzstation zugeführt, welche mittels gesteuerter Greifarme die Produktscheiben in die auf einem separaten Förderer herangeführten Behälter umsetzt.

Es ist eine Aufgabe der Erfindung, eine Vorrichtung zu schaffen, die eine wirtschaftlichere Handhabung von Produktportionen ermöglicht.

Die Lösung dieser Aufgabe erfolgt durch eine Vorrichtung mit den Merkmalen des Anspruchs 1.

Erfindungsgemäß umfasst die Vorrichtung eine in der Umgebung des Produktförderers angeordnete automatische Gewichtsausgleichseinheit, welche dazu dient, in Abhängigkeit von dem ermittelten Gewicht einer Portion der Portion zusätzlich wenigstens ein einzelnes Produkt hinzuzufügen. Durch das Hinzufügen einzelner Produkte, zum Beispiel einzelner geschnittener Produktscheiben, zu einer bestehenden Portion kann eine untergewichtige Portion auf ein gewünschtes Sollgewicht gebracht werden. Ein Aussortieren oder manuelles Korrigieren fehlgewichtiger Portionen ist somit überflüssig. Durch die automatische Gewichtskompensation werden folglich der Durchsatz an geförderten Portionen und somit auch die Effizienz der Gesamtanlage gesteigert.

Die Gewichtsausgleichseinheit umfasst einen Roboter, insbesondere einen nach dem Delta-Prinzip arbeitenden Roboter. Das Hinzufügen einzelner Produkte zu einer Portion kann dadurch erfolgen, dass der Roboter mittels eines geeigneten Endeffektors, wie zum Beispiel eines Produktgreifers oder einer Vakuumsaugvorrichtung, ein einzelnes Produkt von einer Produktzufuhr aufnimmt und auf einer untergewichtigen Portion ablegt.

Der Roboter dient erfindungsgemäß zusätzlich dazu, eine geförderte Portion aufzunehmen und in einem Ablagebereich abzulegen. Die Gewichtsausgleichseinheit lässt sich somit in vorteilhafter Weise durch einen Roboter realisieren, der ohnehin zum Umsetzen der geförderten Portionen vorgesehen ist. Der Roboter erfüllt mit anderen Worten eine Doppelfunktion. Da das Ergänzen untergewichtiger Portionen durch zusätzliche einzelne Produkte bei geeigneter Steuerung der Produktbearbeitungsvorrichtung nur in Einzelfällen erforderlich ist, ist eine derartige doppelfunktionale Nutzung des Roboters problemlos möglich.

Weiterbildungen der Erfindung sind in den abhängigen Ansprüchen, der Beschreibung sowie der beigefügten Zeichnung angegeben.

Gemäß einer Ausführungsform ist der Gewichtsausgleichseinheit eine von dem Produktförderer getrennte Produktzufuhr zugeordnet, welche der Gewichtsausgleichseinheit nacheinander einzelne Produkte bereitstellt. Der Gewichtsausgleichseinheit steht auf diese Weise stets eine ausreichende Anzahl an Einzelprodukten für einen Gewichtsausgleich zur Verfügung. Die separate Produktzufuhr kann beispielsweise von derselben Schneidvorrichtung gespeist werden wie der Produktförderer, oder es kann eine separate Schneidvorrichtung für die Produktzufuhr vorgesehen sein.

Die Gewichtsausgleichseinheit kann dazu ausgebildet sein, einer Portion wenigstens ein Produkt hinzuzufügen, falls das ermittelte Gewicht der Portion einen vorgegebenen Schwellenwert unterschreitet. Sobald also eine Portion mit zu geringem Gewicht gefördert wird, sorgt die Gewichtsausgleichseinheit dafür, dass durch Zugabe von einem oder mehreren einzelnen Produkten das Gewicht entsprechend angepasst wird.

Vorzugsweise ist die Gewichtsausgleichseinheit dazu ausgebildet, einer Portion nacheinander mehrere einzelne Produkte hinzuzufügen, bis das Gewicht der Portion einen vorgegebenen Sollwert erreicht hat. Auf diese Weise können auch relativ stark untergewichtige Portionen auf das gewünschte Sollgewicht gebracht werden.

Der Produktförderer kann einer die Portionen erstellenden Produktbearbeitungsvorrichtung, zum Beispiel einer Schneidvorrichtung, nachgeordnet sein, wobei eine Steuereinrichtung dafür sorgt, dass die erstellten Portionen ein vorgegebenes Maximalgewicht nicht überschreiten. Mittels der Steuereinrichtung wird somit also erreicht, dass nur solche Portionen erstellt und gefördert werden, die innerhalb eines Toleranzbereichs korrektgewichtig sind oder untergewichtig sind. Auf diese Weise ist sichergestellt, dass ein Gewichtsausgleich stets durch eine Hinzufügung von einzelnen Produkten zu einer Portion erzielt werden kann, während es grundsätzlich nicht erforderlich ist, einzelne Produkte von einer Portion zu entfernen. Hierdurch ist ein besonders einfacher Aufbau der Gewichtsausgleichseinheit möglich, da keine Maßnahmen zur Entnahme und gegebenenfalls zur Rückführung einzelner Produkte zu treffen sind.

Gemäß einer weiteren Ausführungsform ist wenigstens ein weiterer Roboter vorgesehen, um geförderte Portionen von dem Produktförderer aufzunehmen und in einem Ablagebereich abzulegen, wobei der Ablagebereich bevorzugt einer Verpackungsmaschine oder einer weiteren Fördervorrichtung zugeordnet ist. Es kann also eine Anordnung von mehreren Robotern vorgesehen sein, um geförderte Portionen von dem Produktförderer auf beispielsweise eine Produktablage einer Verpackungsmaschine oder einen weiteren Produktförderer umzusetzen. Wenigstens einer dieser Roboter kann dabei die bereits erwähnte Doppelfunktion erfüllen, indem er nicht nur dem Umsetzen von Produkten, sondern auch dem Ausgleichen des Produktgewichts dient. Zweckmäßigerweise ist dieser Roboter mit einer eigenen Produktzufuhr versehen und mittels einer Steuereinrichtung in geeigneter Weise ansteuerbar.

Eine Produktzufuhr der Gewichtsausgleichseinheit kann als Produktförderer ausgebildet sein, welcher einzelne Produkte nacheinander entlang einer Zufuhrrichtung fördert, beispielsweise als Bandförderer. Die Zufuhr der einzelnen Produkte kann dabei in geeigneter Richtung quer oder parallel zur Förderrichtung der geförderten Produktportionen erfolgen.

Gemäß einer weiteren Ausgestaltung der Erfindung ist die Produktzufuhr einer Schneidvorrichtung zum Erstellen einzelner Produkte nachgeordnet. Vorteilhafterweise handelt es sich bei dieser Schneidvorrichtung um diejenige Schneidvorrichtung, die auch zur Erzeugung der geförderten Produktportionen dient, da auf diese Weise keine eigene Schneidvorrichtung zur Erstellung der einzelnen Produkte für den Gewichtsausgleich vorgesehen werden muss. Selbstverständlich ist aber auch eine Ausführungsform vorstellbar, bei welcher der Gewichtsausgleichseinheit eine eigenständige Schneidvorrichtung zugeordnet ist.

Die Erfindung betrifft auch ein Verfahren zum Handhaben von Portionen aus Produkten, insbesondere Lebensmittelprodukten, bei welcher das Gewicht einer geförderten Portion mittels wenigstens eines Sensors ermittelt wird, mittels eines Roboters geförderte Portionen von dem Produktförderer aufgenommen und in einem Ablagebereich abgelegt werden und mittels desselben Roboters der Portion in Abhängigkeit von dem ermittelten Gewicht automatisch zusätzlich wenigstens ein einzelnes Produkt hinzugefügt wird.

Die Erfindung wird im Folgenden beispielhaft unter Bezugnahme auf die Zeichnung beschrieben.

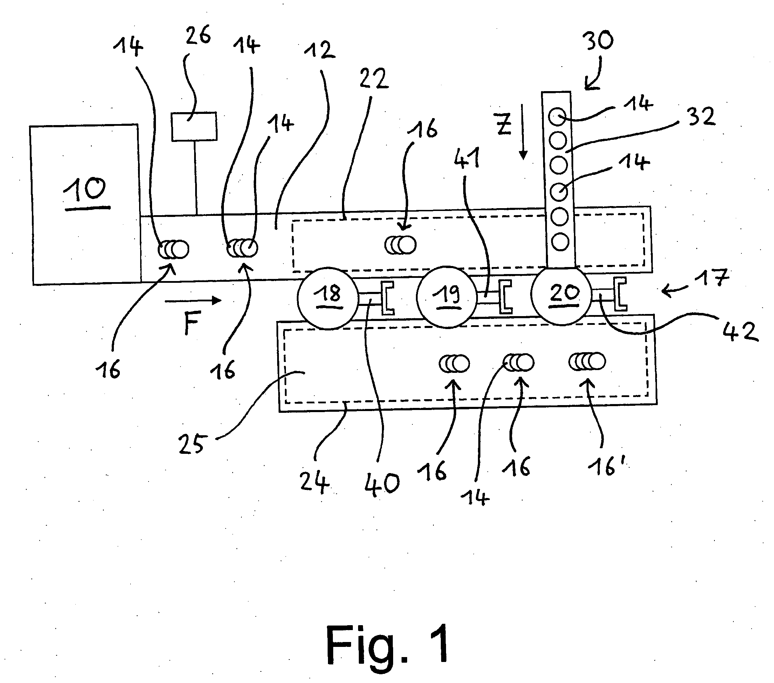

- Fig. 1: zeigt eine schematische Draufsicht auf eine erfindungsgemäße Vorrichtung zur Handhabung von Portionen aus Produkten.

In Fig. 1 ist eine erfindungsgemäße Vorrichtung zur Handhabung von Portionen 16 aus Lebensmittelprodukten, wie beispielsweise Fleisch-, Wurst- oder Käsescheiben, dargestellt. Ein Slicer 10 trennt von einem nicht dargestellten Produktlaib mit hoher Geschwindigkeit einzelne Produktscheiben 14 ab, welche auf einen Bandförderer 12 fallen und von diesem entlang einer Förderrichtung F gefördert werden. Eine nicht dargestellte Steuereinrichtung des Slicers 10 und/oder des Bandförderers 12 sorgt dafür, dass jeweils mehrere abgeschnittene Produktscheiben 14 eine Portion 16 bilden.

Zum Umsetzen der Portionen 16 von dem Bandförderer 12 auf eine Produktablage 25 einer nicht im einzelnen dargestellten Verpackungsmaschine ist eine Umsetzvorrichtung 17 vorgesehen, die einen ersten Roboter 18 und einen zweiten Roboter 19 umfasst. Zusätzlich ist dem ersten und zweiten Roboter 18, 19 in Förderrichtung F gesehen ein dritter Roboter 20 nachgelagert, dessen Funktion nachfolgend näher erläutert wird. Im dargestellten Beispiel handelt es sich bei den Robotern 18, 19, 20 um sogenannte "Pick and Place"-Roboter mit Delta-Kinematik. Die Gesamtzahl der insgesamt vorgesehenen Roboter richtet sich nach der jeweils geforderten Umsetzleistung. Lediglich beispielhaft sind hier drei Roboter gezeigt.

Die Portionen 16 werden durch den Bandförderer 12 in einen Aufnahmebereich 22 transportiert, durch Endeffektoren 40, 41 der in Förderrichtung F gesehen ersten beiden Roboter 18, 19 aufgenommen und in einen durch die Produktablage 25 definierten Ablagebereich 24 umgesetzt. Dabei können je nach Anwendung Sortiervorgänge und/oder das Positionieren der Portionen 16 auf der Produktablage 25 zu einem Formatsatz als Zusatzaufgaben durchgeführt werden. Nach ihrer Umsetzung werden die in den Ablagebereich 24 umgesetzten Portionen 16 in Förderrichtung F weiter transportiert.

Mittels eines Sensors 26 wird an einer zwischen dem Slicer 10 und dem Aufnahmebereich 22 gelegenen Stelle das Gewicht der geförderten Portionen 16 ermittelt. Bei dem Sensor 26 kann es sich beispielsweise um eine elektronische Waage, eine optische Erfassungseinrichtung oder dergleichen handeln.

Um die Ausgabe fehlgewichtiger Portionen 16 zu vermeiden, ist eine automatische Gewichtsausgleichseinheit 30 vorgesehen, welche den dritten Roboter 20, d.h. also den in Förderrichtung F gesehen letzten Roboter, sowie eine von dem Bandförderer 12 getrennte Produktzufuhr 32 umfasst.

Die Produktzufuhr 32, welche als Band- oder Riemenförderer ausgebildet sein kann, fördert nacheinander einzelne Produktscheiben 14 entlang einer Zufuhrrichtung Z, um diese zum Aufnehmen durch den dritten Roboter 20 bereitzustellen. Die Zufuhrrichtung Z verläuft im dargestellten Ausführungsbeispiel quer zu der Förderrichtung F. Die Produktscheiben 14 für die Produktzufuhr 32 können beispielsweise von Hand aufgelegt oder durch ein separates, nicht dargestelltes Schneidsystem erzeugt werden.

Der Slicer 10 und der Bandförderer 12 werden derart betrieben, dass die erstellten Portionen 16 ein vorgegebenes Maximalgewicht nicht überschreiten. Es wird also - beispielsweise über die Einstellung und/oder Ansteuerung des Slicers 10 bzw. des Bandförderers 12 - dafür gesorgt, dass nur untergewichtige und innerhalb eines Toleranzbereichs korrektgewichtige, aber jedenfalls keine übergewichtigen Portionen 16 erzeugt werden.

Eine nicht dargestellte Steuereinrichtung prüft anhand von durch den Sensor 26 bereitgestellten Signalen, ob das jeweils ermittelte Gewicht der Portionen 16 einen vorgegebenen Schwellenwert unterschreitet. Die Steuereinrichtung erkennt also, welche der von dem ersten Roboter 18 und dem zweiten Roboter 19 in den Ablagebereich 24 umgesetzten Portionen 16 untergewichtig sind und welche nicht. Dementsprechend nimmt der dritte Roboter 20 - gesteuert durch die Steuereinrichtung - mittels eines Endeffektors 42 eine Produktscheibe 14 von der Produktzufuhr 32 auf und legt sie in dem Ablagebereich 24 auf einer als untergewichtig erkannten Portion 16 ab, sobald diese an ihm vorbeigefördert wird. Sofern das - im voraus bekannte - Gewicht einer einzelnen Produktscheibe 14 nicht ausreicht, um das Gewicht der untergewichtigen Portion 16 auf den vorgegebenen Sollwert zu bringen, legt der dritte Roboter 20 nacheinander eine oder mehrere weitere Produktscheiben 14 auf der betreffenden Portion 16 ab, bis das Gewicht der Portion 16 den vorgegebenen Sollwert erreicht hat.

Bei hinreichend genauer Kenntnis des aufzuschneidenden Produktlaibes und entsprechender Steuerung der Schneidvorrichtung bzw. des Produktförderers ist es möglich, das Gewicht der geförderten Portionen 16 so genau einzuhalten, dass ein Gewichtsausgleich nur relativ selten erforderlich ist. In diesem Fall kann der dritte Roboter 20 nicht nur für den automatischen Gewichtsausgleich, sondern - entsprechend dem ersten und zweiten Roboter 18, 19 - zusätzlich auch zum Umsetzen der Portionen 16 von dem Bandförderer 12 auf die Produktablage 25 genutzt werden.

Im Ergebnis werden aufgrund des automatischen Gewichtsausgleichs also ausschließlich solche Portionen 16 an die Verpackungsmaschine ausgegeben, deren Gewicht innerhalb einer vorgegebenen Toleranz dem gewünschten Sollwert entspricht, wobei gegebenenfalls einzelne Portionen 16' eine größere Anzahl von Produktscheiben 14 aufweisen können als andere Portionen 16.

Die Anzahl und Verwendung der Roboter 18, 19, 20 sowie die Anzahl und Anordnung etwaiger weiterer Produktzufuhren 32 kann in vielfältiger Weise an die jeweilige Anwendung angepasst werden. So ist es zum Beispiel möglich, anstelle des dritten Roboters 20 den in Förderrichtung F gesehen ersten Roboter 18 oder mehrere oder alle vorhandenen Roboter zum bedarfsweisen Gewichtsausgleich heranzuziehen. Ebenso kann der Gewichtsausgleich je nach Anwendung auf dem Bandförderer 12 oder auf der Produktablage 25 durchgeführt werden

Wird anstelle des dritten Roboters 20 beispielsweise der erste Roboter 18 zum Gewichtsausgleich verwendet, ist es zweckmäßig, den Gewichtsausgleich auf dem Bandförderer 12 anstatt auf der Produktablage 25 durchzuführen, d.h. also zusätzliche Produktscheiben 14 auf untergewichtigen Portionen 16 abzulegen, während sich diese noch auf dem Bandförderer 12 befinden. Den nachfolgenden Robotern 19, 20 werden bei dieser Konstellation somit ausschließlich korrektgewichtige Portionen 16 zum Umsetzen bereitgestellt.

### Bezugszeichenliste

- 10: Slicer
- 12: Bandförderer
- 14: Produktscheibe
- 16, 16': Portion
- 17: Umsetzvorrichtung
- 18: erster Roboter
- 19: zweiter Roboter
- 20: dritter Roboter
- 22: Aufnahmebereich
- 24: Ablagebereich
- 25: Produktablage
- 26: Sensor
- 30: Gewichtsausgleichseinheit
- 32: Produktzufuhr
- 40: Endeffektor des ersten Roboters
- 41: Endeffektor des zweiten Roboters
- 42: Endeffektor des dritten Roboters

- F: Förderrichtung
- Z: Zufuhrrichtung

## Patentansprüche

1. Vorrichtung zum Handhaben von Portionen (16) aus Produkten (14), insbesondere Lebensmittelprodukten,
mit einem Produktförderer (12), welcher die Portionen (16) nacheinander entlang einer Förderrichtung (F) fördert,
wenigstens einem Sensor (26), der dazu dient, das Gewicht der geförderten Portionen (16) zu ermitteln, und
einer in der Umgebung des Produktförderers (12) angeordneten automatischen Gewichtsausgleichseinheit (30), welche dazu dient, einer Portion (16) in Abhängigkeit von dem ermittelten Gewicht der Portion (16) zusätzlich wenigstens ein einzelnes Produkt (14) hinzuzufügen,
**dadurch gekennzeichnet, dass**
die Gewichtsausgleichseinheit (30) einen Roboter (20) umfasst, welcher zusätzlich dazu dient, geförderte Portionen (16) von dem Produktförderer (12) aufzunehmen und in einem Ablagebereich (24) abzulegen.

2. Vorrichtung nach Anspruch 1,
**dadurch gekennzeichnet, dass**
der Gewichtausgleichseinheit (30) eine von dem Produktförderer (12) getrennte Produktzufuhr (32) zugeordnet ist, welche nacheinander einzelne Produkte (14) bereitstellt.

3. Vorrichtung nach Anspruch 2,
**dadurch gekennzeichnet, dass**
die Produktzufuhr (32) einer Schneidvorrichtung zum Erstellen einzelner Produkte (14) nachgeordnet ist.

4. Vorrichtung nach zumindest einem der vorstehenden Ansprüche, **dadurch gekennzeichnet, dass**
die Gewichtsausgleichseinheit (30) dazu ausgebildet ist, einer Portion (16) wenigstens ein Produkt (14) hinzuzufügen, falls das ermittelte Gewicht der Portion (16) einen vorgegebenen Schwellenwert unterschreitet.

5. Vorrichtung nach zumindest einem der vorstehenden Ansprüche, **dadurch gekennzeichnet, dass**
die Gewichtsausgleichseinheit (30) dazu ausgebildet ist, einer Portion (16) mehrere einzelne Produkte (14) nacheinander hinzuzufügen, bis das Gewicht der Portion (16) einen vorgegebenen Sollwert erreicht hat.

6. Vorrichtung nach zumindest einem der vorstehenden Ansprüche, **dadurch gekennzeichnet, dass**
der Produktförderer (12) einer die Portionen (16) erstellenden Produktbearbeitungsvorrichtung (10), z.B. einer Schneidvorrichtung, nachgeordnet ist, wobei eine Steuereinrichtung dafür sorgt, dass die erstellten Portionen (16) ein vorgegebenes Maximalgewicht nicht überschreiten.

7. Vorrichtung nach zumindest einem der vorstehenden Ansprüche, **dadurch gekennzeichnet, dass**
der Roboter (20) ein nach dem Delta-Prinzip arbeitender Roboter ist.

8. Vorrichtung nach zumindest einem der vorstehenden Ansprüche, **dadurch gekennzeichnet, dass**
wenigstens ein weiterer Roboter (18, 19) vorgesehen ist, um geförderte Portionen (16) aufzunehmen und in einem Ablagebereich (24) abzulegen.

9. Vorrichtung nach zumindest einem der vorstehenden Ansprüche, **dadurch gekennzeichnet, dass**
der Ablagebereich (24) einer Verpackungsmaschine oder einer weiteren Fördervorrichtung zugeordnet ist.

10. Verfahren zum Handhaben von Portionen (16) aus Produkten (14), insbesondere Lebensmittelprodukten, insbesondere mittels einer Vorrichtung gemäß einem der vorherigen Ansprüche, wobei
das Gewicht der geförderten Portionen (16) mittels wenigstens eines Sensors (26) ermittelt wird, **dadurch gekennzeichnet, dass**
mittels eines Roboters (20) geförderte Portionen (16) von dem Produktförderer (12) aufgenommen und in einem Ablagebereich (24) abgelegt werden und
mittels desselben Roboters (20) einer Portion (16) in Abhängigkeit von ihrem ermittelten Gewicht automatisch zusätzlich wenigstens ein einzelnes Produkt (14) hinzugefügt wird.

## Claims

1. An apparatus for handling portions (16) of products (14), in particular food products,
having a product conveyor (12) which conveys the portions (16) sequentially along a conveying direction (F); and
having at least one sensor (26) which serves to determine the weight of the conveyed portions (16); and
having an automatic weight compensation unit (30) which is arranged in the vicinity of the product conveyor (12) and which serves to additionally add at least one single product (14) to a portion (16) in dependence on the determined weight of the portion (16), **characterized in that**
the weight compensation unit (30) comprises a robot (20) which additionally serves to pick up conveyed portions (16) from the product conveyor (12) and to place them in a placement area (24).

2. An apparatus in accordance with claim 1,
**characterized in that**
a product supply (32) separate from the product conveyor (12) is associated with the weight compensation unit (30) and sequentially provides single products (14).

3. An apparatus in accordance with claim 2,
**characterized in that**
the product supply (32) is arranged downstream of a cutting apparatus for preparing single products (14).

4. An apparatus in accordance with at least one of the preceding claims, **characterized in that**
the weight compensation unit (30) is configured to add at least one product (14) to a portion (16) if the determined weight of the portion (16) is below a preset threshold value.

5. An apparatus in accordance with at least one of the preceding claims, **characterized in that**
the weight compensation unit (30) is configured sequentially to add a plurality of single products (14) to a portion (16) until the weight of the portion (16) has reached a preset desired value.

6. An apparatus in accordance with at least one of the preceding claims, **characterized in that**
the product conveyor (12) is disposed downstream of a product processing apparatus (10) preparing the portions (16), e.g. a cutting apparatus, with a control device ensuring that the prepared portions (16) do not exceed a preset maximum weight.

7. An apparatus in accordance with at least one of the preceding claims, **characterized in that**
the robot (20) is a robot working in accordance with the delta principle.

8. An apparatus in accordance with at least one of the preceding claims, **characterized in that**
at least one further robot (18, 19) is provided to pick up conveyed portions (16) and to place them in a placement area (24).

9. An apparatus in accordance with at least one of the preceding claims, **characterized in that**
the placement area (24) is associated with a packaging machine or with a further conveying apparatus.

10. A method for handling portions (16) of products (14), in particular food products, in particular by means of an apparatus in accordance with any one of the preceding claims, wherein
the weight of the conveyed portions (16) is determined by means of at least one sensor (26),
**characterized in that**
portions (16) conveyed by means of a robot (20) are picked up from the product conveyor (12) and are placed in a placement area (24); and
**in that** at least one single product (14) is automatically additionally added to a portion (16) by means of the same robot (20) in dependence on its determined weight.

## Revendications

1. Dispositif de manipulation de portions (16) de produits (14), en particulier de produits alimentaires,
comportant un convoyeur de produits (12) qui convoie les portions (16) les unes derrière les autres le long d'une direction de convoyage (F),
au moins un capteur (26) qui sert à détecter le poids des portions convoyées (16), et
une unité de compensation pondérale (30) automatique agencée aux alentours du convoyeur de produits (12), laquelle sert à ajouter à une portion (16) en supplément au moins un produit individuel (14) en fonction du poids détecté de la portion (16),
**caractérisé en ce que**
l'unité de compensation pondérale (30) comprend un robot (20) qui sert en supplément à recevoir des portions convoyées (16) du convoyeur de produits (12) et à les déposer dans une zone de dépose (24).

2. Dispositif selon la revendication 1,
**caractérisé en ce que**
à l'unité de compensation pondérale (30) est associée une alimentation en produits (32) séparée du convoyeur de produits (12), qui met à disposition successivement des produits individuels (14).

3. Dispositif selon la revendication 2,
**caractérisé en ce que**
l'alimentation en produits (32) est agencée en aval d'un dispositif de coupe pour réaliser des produits individuels (14).

4. Dispositif selon l'une des revendications précédentes,
**caractérisé en ce que**
l'unité de compensation pondérale (30) est réalisée pour ajouter à une portion (16) au moins un produit (14) si le poids détecté de la portion (16) passe au-dessous d'une valeur seuil prédéfinie.

5. Dispositif selon l'une des revendications précédentes,
**caractérisé en ce que**
l'unité de compensation pondérale (30) est réalisée pour ajouter à une portion (16) successivement plusieurs produits individuels (14) jusqu'à ce que le poids de la portion (16) ait atteint une valeur seuil prédéfinie.

6. Dispositif selon l'une des revendications précédentes,
**caractérisé en ce que**
le convoyeur de produits (12) est agencé en aval d'un dispositif de traitement de produits (10) qui établit les portions (16), par exemple en aval d'un dispositif de coupe, un dispositif de commande assurant que les portions établies (16) ne dépassent pas un poids maximal prédéfini.

7. Dispositif selon l'une des revendications précédentes,
**caractérisé en ce que**
le robot (20) est un robot qui fonctionne selon le principe delta.

8. Dispositif selon l'une des revendications précédentes,
**caractérisé en ce que**
il est prévu au moins un autre robot (18, 19) pour recevoir des portions convoyées (16) et pour les déposer dans une zone de dépose (24).

9. Dispositif selon l'une des revendications précédentes,
**caractérisé en ce que**
la zone de dépose (24) est associée à une machine d'emballage ou à un autre dispositif de convoyage.

10. Procédé de manipulation de portions (16) de produits (14), en particulier de produits alimentaires, en particulier au moyen d'un dispositif selon l'une des revendications précédentes, dans lequel le poids des portions convoyées (16) est détecté au moyen d'au moins un capteur (26),
**caractérisé en ce que**
des portions (16) convoyées au moyen d'un robot (20) sont reçues par le convoyeur de produits (12) et déposées dans une zone de dépose (24)
et
au moyen du même robot (20), en supplément au moins un produit individuel (14) est ajouté automatiquement à une portion (16) en fonction de son poids détecté.
